# EUROPEAN PATENT APPLICATION

(11) **EP 2 546 532 A2**
(43) Date of publication of application: **16.01.2013**
(21) Application number: 12175830.4
(22) Date of filing: 11.07.2012
(51) Int. Cl.: F16B 5/06

(54) **Fastener**

(30) Priority: 13.07.2011 DE 102011051817
(71) Applicant: Newfrey LLC, Newark, Delaware 19711 (US)
(72) Inventor: Rosemann, Frank, 35394 Gießen (DE); Kempf, Christian, 35394 Gießen (DE); Reindl, Johann, 35394 Gießen (DE); Saltenberger, Reimar, 35394 Gießen (DE)
(74) Representative: Haar, Lucas Heinz Jörn

(57) **Abstract**

A fastener comprises a first fastening part (10) that has a flange (11) and an expansion sleeve (13) projecting from the flange (11) that is designed to anchor the first fastening part (10) in a fastening opening of a first component, and a second fastening part (30) that has means for fastening to a second component and can be connected to the flange (11) through resilient first catches (17). The fastening parts (10, 30) have resilient, second catches (18) by means of which the fastening parts can be connected to one another in a pre-locking position in which they are spaced a distance from one another. In the pre-locking position, one end of an expansion pin (28) is inserted into the expansion sleeve (13) in such a manner that the diameter of the expansion sleeve (13) is not enlarged, and the expansion pin can be pressed into the expansion sleeve (13) by the second fastening part (30) in order to bring about an enlargement of the diameter of the expansion sleeve (13).

## Description

The invention relates to a fastener, in particular for fastening a trim part to a support part of a motor vehicle, having a first fastening part that has a flange with a front and a back and an expansion sleeve that projects from the front of the flange and has an opening that is designed to anchor the first fastening part in a fastening opening of a first component, having a second fastening part that has means for fastening to a second component and that can be connected to the flange of the first fastening part in a fully locked position through resilient first catches, and having an expansion pin that can be inserted into the expansion sleeve and can be pressed into an expansion position in the expansion sleeve through movement of the second fastening part into the fully locked position, in which position the pin brings about an enlargement of the diameter of the expansion sleeve.

In a fastener of the aforementioned type known from DE 10 2006 002,195 A1, the expansion pin is an integral component of the second fastening part and is inseparably attached to the second fastening part. The first catches are located on the flange of the first fastening part, and in the fully locked position each catch engages from the outside in a stepped recess in the second fastening part, wherein their ratchets brace against a locking surface located in the recess. The prior art fastener has the disadvantage that, when both fastening parts are installed jointly by the means that the expansion sleeve is preinstalled on the expansion pin, problems can arise due to separation of the expansion sleeve and expansion pin or through premature expansion of the expansion sleeve. This can make additional installation activities necessary and can lengthen the installation time. Moreover, in the event of a forceful separation of the second fastening part from the first one, the expansion pin can be pulled out of the expansion sleeve of the first fastening part so that the expansion sleeve loses its hold in the fastening opening of the component and is separated from the component. This may not be desired.

The object of the invention is to create a fastener of the specified type that is easy and trouble-free to install, can accommodate high retention forces, and in which the anchoring of the expansion sleeve in the fastening opening of a component cannot be released by a separation of the second fastening part from the first fastening part.

The object is attained by a fastener with the features specified in claim 1. Advantageous embodiments of the fastener are specified in claims 2 through 14.

The fastener according to the invention comprises a first fastening part that has a flange with a front and a back and an expansion sleeve that projects from the front of the flange and has an opening that is designed to anchor the first fastening part in a fastening opening of a first component, a second fastening part that has means for fastening to a second component and that can be connected to the flange of the first fastening part in a fully locked position through resilient first catches, and with an expansion pin that can be inserted into the expansion sleeve and can be pressed into an expansion position in the expansion sleeve through movement of the second fastening part into the fully locked position, in which position the pin brings about an enlargement of the diameter of the expansion sleeve, wherein the fastening parts have resilient, second catches by means of which they can be connected to one another in a pre-locking position in which they are spaced a distance from one another, and wherein the expansion pin is separated from the second fastening part and, in the pre-locking position, rests with one end against the second fastening part and with the other end engages the expansion sleeve in such a manner that the diameter of the expansion sleeve is not enlarged.

In the fastener according to the invention, the fastening parts are connected to one another in a pre-locking position by resilient second catches. In this way, the expansion pin can be separate from the second fastening part so that its expansion function is preserved when the second fastening part is separated from the first fastening part. Moreover, the second catches produce a reliable connection of the two fastening parts in the pre-locking position, thus avoiding to the greatest degree possible the risk of a separation of the preassembled fastening parts during installation and a resultant disruption of the installation flow.

According to the invention, the first catches can be arranged and designed such that they hold the fastening parts at a distance in the pre-locking position with a defined force, and in this way, counter unwanted displacement of the expansion pin and resultant expansion of the expansion sleeve during assembly. The expansion pin can be inserted loose in the expansion sleeve since it is secured against falling out by the second fastening part. To increase resistance to displacement, and for the option that is likewise provided of separate installation of the first and second fastening parts, a frictional connection or a separable material connection can also be provided between the expansion pin and the expansion sleeve.

According to another proposal of the invention, the first catches can be located on the back of the flange of the first fastening part, and the second fastening part can have openings that accommodate the first catches in the fully locked position, wherein a detent catch is located at each of the openings that projects into the clear area of the opening and cooperates with the first catch. This design makes it possible for the fastener to have a low overall height, and fosters the achievement of very high pull-off forces. The first catches here can each have an arm projecting from the flange essentially perpendicularly to the plane of the flange, and a flexible locking finger attached to the free end of the stiff arm that extends towards the plane of the flange at an acute angle to the arm.

The arms of the first catches can guide the second fastening part as it is placed on the first fastening part, and can support the second fastening part in the directions parallel to the plane of the flange in the fully locked position, in which it is attached to the first fastening part. The angled arrangement of the flexible locking fingers allows a relatively long spring travel, and hence a wide contact zone between the locking fingers and the detent catches in the fully locked position. This and the angled arrangement of the locking fingers are advantageous for achieving high pull-off forces.

According to the invention, provision can also be made for each detent catch to have a locking surface that is adjacent to a first inner wall of the opening in the second fastening part, and for the locking finger of the first catch engaging in the opening to be supported on the locking surface and on the first inner wall of the opening in the fully locked position. As a result of the support on the first inner wall of the opening, the locking finger is stabilized in its locked position, so that high retention forces can be achieved. Moreover, it is advantageous in this regard for the arm of the catch to be supported in the fully locked position on a second inner wall of the opening opposite the first inner wall, since this increases the load resistance of the arm.

According to another advantageous embodiment of the invention, the second catches can be mounted on the back of the flange of the first fastening part and can each have a flexible finger projecting from the flange with a ratchet that has a locking surface facing the flange being formed at the free end of the finger, and the second fastening part can have recesses on opposite sides, delimited by a locking rib, into which the ratchets of the second catches snap in the pre-locking position. This design permits easy manufacture of the two fastening parts and additionally has the advantage that the second catches engaging in the recesses support the fastening parts on one another in the direction of the plane of the flange.

The second fastening part can, according to the invention, have the form of an essentially flat plate with a front designed to contact the flange and a back provided with means for fastening a second component, wherein the thickness of the plate is dimensioned sufficiently large that the first and second catches do not project past the back of the plate in the fully locked position. The plate-like design of the second fastening part permits a large-area connection by means of welding or adhesive bonding to the component to be fastened, and thereby ensures the transmission of high retention forces.

In addition, provision can be made for the locking ribs that cooperate with the second catches to project from the front of the second fastening part and for the first fastening part to have recesses on its back to accommodate the locking ribs. In this way, a relatively large spacing between the fastening parts can be achieved in the pre-locking position with low overall height of the fastener in the fully locked position.

Another factor that can contribute to a low overall height is for the second fastening part to have a recess on the side facing the first fastening part for accommodating one end of the expansion pin. The recess additionally has the effect that the expansion pin is not pushed completely into the expansion sleeve in the fully locked position. Consequently, after separation of the fastening parts, the expansion pin can be gripped at the end projecting from the expansion sleeve and can be removed from the expansion sleeve if the first fastening part is to be released from the component.

For ease of handling of the fastener during installation, the second fastening part can have sections that project laterally beyond the first fastening part and have open receiving holes on the front of the second fastening part for the engagement of a holding device.

Preferably, the first fastening part and the second fastening part are made of thermoplastic material. In this design, the second fastening part can be provided with a metal insert on its back. The metal insert offers the possibility of heating a region adjacent to the insert with the aid of an inductor, and thereby attaching the second fastening part to a component by adhesive means or welding.

The expansion pin can advantageously be held on the first fastening part in the opening of the expansion sleeve by friction. Alternatively, provision can be made for the expansion pin to be primary molded from thermoplastic material as a single piece with the first fastening part and to be held in the opening of the expansion sleeve by a separable film web.

The expansion sleeve can have a round or rectangular cross-section according to the invention. The latter is useful when the expansion sleeve is intended to be located in a non-rotating manner in a fastening opening that is shaped accordingly.

The invention is explained in detail below using an example embodiment, which is shown in the drawings, wherein:
- Fig. 1: shows a perspective view of the back of a first fastening part of a fastener according to the invention,
- Fig. 2: a perspective view of the front of the fastener from Fig. 1,
- Fig. 3: a perspective view of the back of a second fastening part of a fastener according to the invention,
- Fig. 4: a perspective view of the front of the fastener from Fig. 3,
- Fig. 5: a side view of the fastener according to the invention in the pre-locking position,
- Fig. 6: a cross-section of the fastener according to the invention in the pre-locking position, and
- Fig. 7: a cross-section of the fastener according to the invention in the fully locked position.

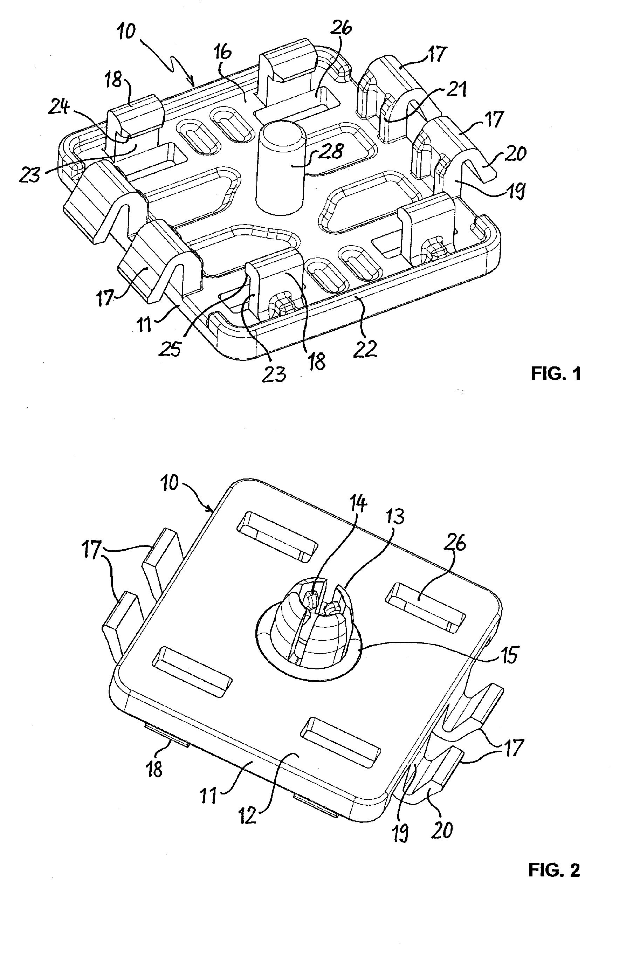

The first fastening part 10 of the fastener shown in Figures 1 and 2 comprises a plate-like, approximately square flange 11 with a flat front 12 and an expansion sleeve 13, which projects from the front 12 in the center of the flange 11. The expansion sleeve 13 is slotted in a cross pattern and has a cylindrical through-hole in which are located inwardly projecting cams 14. The front 12 of the flange 11 is provided with a groove surrounding the expansion sleeve 13, in which groove is located a sealing ring 15. The expansion sleeve 13 has a cylindrical outer contour with a conical taper at the free end. This shape is intended for insertion in circular fastening openings. Alternatively, the expansion sleeve can have a rectangular cross-section when it is intended to be received in square or rectangular fastening openings.

On the back 16, the flange 11 has first catches 17 and second catches 18. The catches 17 are arranged in pairs at opposite edges of the flange 11. Each catch 17 consists of a stiff arm 19 projecting from the flange 11 essentially perpendicularly to the plane of the flange, and a flexible locking finger 20 that extends from the free end of the stiff arm 19 at an acute angle thereto and in the direction of the flange plane. Each of the locking fingers 20 is located on the outside of the arms 19 facing away from the flange center, and thus projects past the edge of the flange 11. This is advantageous for manufacturing the fastening part 10 from plastic as an injection-molded part. In order to achieve the desired stiffness, the arms 19 are provided on their inner side with stiffening ribs 21.

The edges of the flange 11 that are not provided with catches 17 are reinforced on the back 16 with ribs 22. Located in pairs next to the ribs 22 are the second catches 18, each of which has a flexible finger 23 projecting perpendicularly from the back 16 of the flange 11 with a ratchet 24 formed on the finger's free end. The ratchet 24 has a locking surface 25 facing the flange 11 and parallel to the plane of the flange. The ratchets 24 are each arranged on the inner side of the catches 18 facing the center of the flange. In addition the flange 11 has, on the inner side of the catches 18 and immediately adjacent thereto, rectangular recesses 26 in the form of through-openings that are intended to receive locking ribs of the second fastening part.

As is shown in Fig. 1, located in the hole of the expansion sleeve 13 that also passes through the flange 11 is an end section of a cylindrical expansion pin 28. The expansion pin 28 has a slightly larger outside diameter than the inside diameter of the hole, and consequently is held in the hole by friction. Alternatively, the expansion pin 28 can be held in the hole of the expansion sleeve 13 by a material connection provided by means of separable webs.

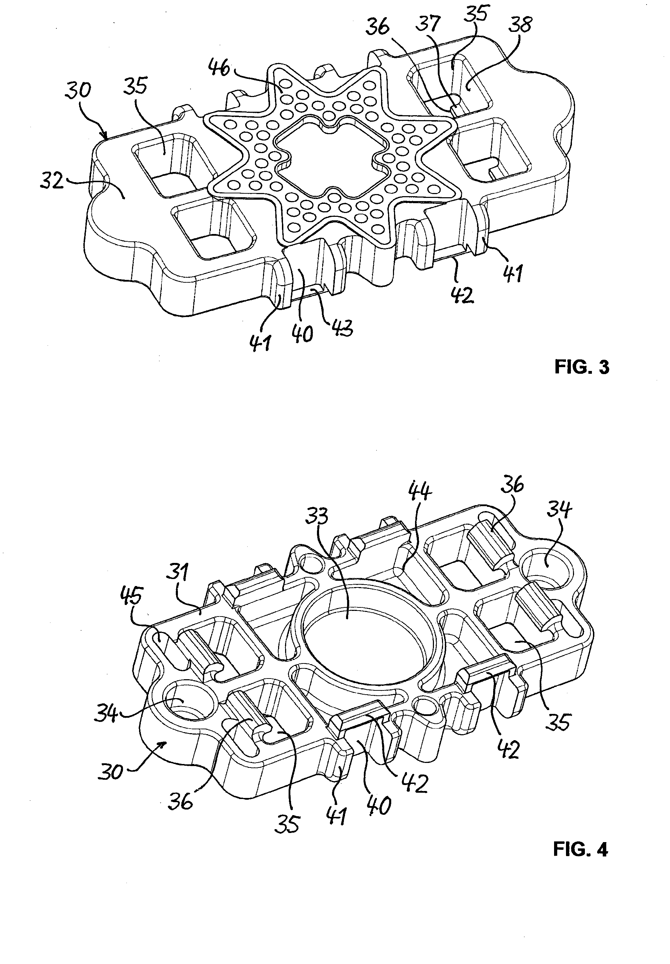

Figures 3 and 4 show a second fastening part 30 that can be connected to the first fastening part 10. The fastening part 30 is in the form of an essentially rectangular plate with a flat front 31 intended to contact the flange 11 of the fastening part 10, and a back 32 designed to fasten a component. On the front 31, the fastening part 30 has a central, dish-like recess 33 in which the expansion pin 28 can engage. Also formed on the front 31, at opposite ends in the longitudinal direction, are open receiving holes 34 for engagement of a holding device. Located between the recess 33 and each of the receiving holes 34 are two rectangular openings 35, which pass through the fastening part 30 and are intended to accommodate the first catches 17. Arranged at the edges of the openings 35 next to the receiving holes 34 are detent catches 36, which project into the clear area of the applicable opening 35. The detent catches 36 project from the flat front 31 and have a locking surface 37 lying in the plane of the front 31 that adjoins an inside wall 38 of the opening 35.

Two recesses 40, which are delimited laterally by projecting ribs 41, are arranged on each of the two longitudinal sides of the fastening part 30, symmetrically to the transverse center plane. Transverse to the ribs 41, the recesses 40 on the front 31 are each delimited by a locking rib 42, which projects from the front 31 and has a locking surface 43 parallel to the plane of the underside. The fastening part 30 also has, on the front 31, open recesses 44, 45, which are advantageous for manufacturing the fastening part 30 from a thermoplastic material.

On the back 32, the fastening part 30 has a star-shaped insert 46, which is made of a perforated sheet metal and is intended for fastening the fastening part 30 to a component by adhesive bonding or welding. The insert can be heated inductively.

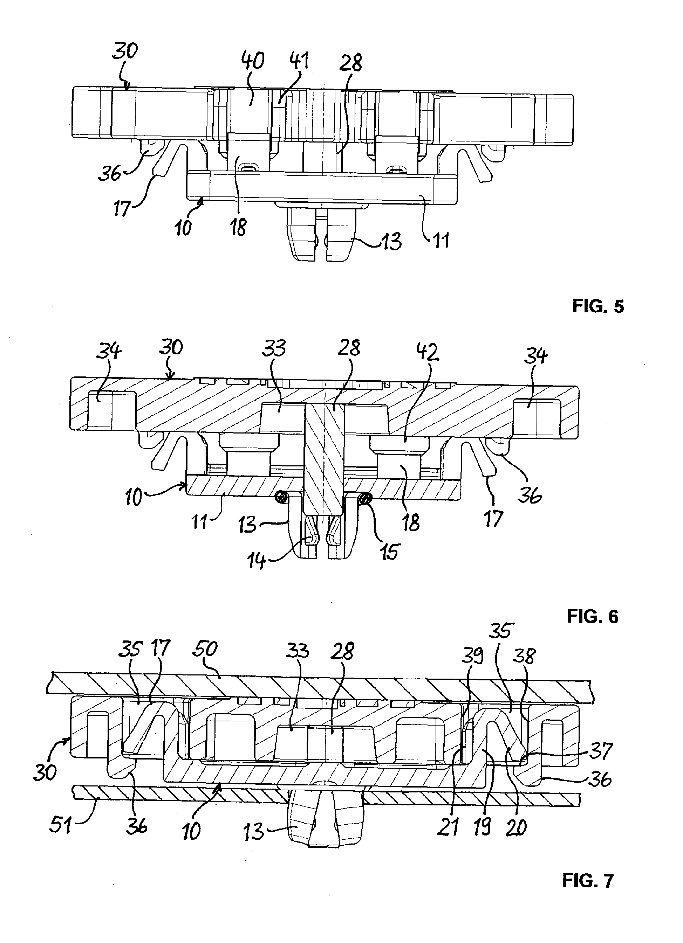

The fastening parts 10 and 30 together form a device for fastening components and, in particular, for fastening trim parts to support parts provided with a fastening opening. For a fastening process of this nature, the two fastening parts 10, 30 can be attached individually to the applicable component and then connected together by snapping into position. However, a preferred use of the fastener is one in which the fastening parts 10, 30 are preassembled and attached first by the second fastening part 30 to a component. In order to make this possible, the fastening parts 10, 30 are connected to one another in such a way that they are in a pre-locking position, which is shown in Figures 5 and 6.

In order to achieve the pre-locking position, the fastening parts 10, 30 are aligned with one another such that the openings 35 are in front of the catches 17, and the ratchets 24 of the catches 18 rest against the locking ribs 42. Of course, an expansion pin 28 is located beforehand in the hole of the expansion sleeve 13, as shown in Figure 1. The fastening parts 10, 30 are now moved towards one another, during which process the ratchets 24 of the catches 18 slide over the locking ribs 42 and then snap into the recesses 40. When this position is reached, the free end of the expansion pin strikes the floor of the recess 33 and, on account of its friction-fit or otherwise achieved retention in the expansion sleeve 13, forms a stop that stabilizes the pre-locking position thus achieved. In this position, the free ends of the catches 17 have entered the openings 35 slightly and thus contribute, along with the catches 18, to the mutual alignment of the fastening parts 10, 30. In the pre-locking position, the locking surfaces 25 of the ratchets 24 contact the locking surfaces 43 of the locking ribs 42, thereby holding the preassembled fastening parts 10, 30 securely in the pre-locking position.

As Figure 6 shows, the receiving holes 34 are located outside of the area occupied by the fastening part 10, so that the fastener that is preassembled in the manner described can be picked up at the receiving holes 34 by means of a holding device, and moved to a trim part for adhesive bonding or welding with the back of the fastening part 30.

After connection of the fastening part 30 to a trim part 50, the unit consisting of trim part 50 and fastener can be advanced to an associated support part 51 and, after insertion of the expansion sleeve 13 in a fastening opening of the support part 51, be completely installed by firm pressing onto the support part 51. In this process, the first catches 17 penetrate completely into the openings 35, with their locking fingers 20 sliding over the detent catches 36 and reaching the locked position resting against the locking surfaces 37 and the inner walls 38. At the same time, the expansion pin 28 resting against the floor of the recess 33 is driven into the expansion sleeve 13, during which process it forces the cams 14 radially outward, thereby expanding the expansion sleeve, which causes it to be firmly anchored in the fastening opening of the support part 51.

The installation state achieved by this process, in which the fastening parts are in the fully locked position, is shown in Figure 7. In the position shown, the fastening parts 10, 30 are supported on one another and are held together by the first catches 17. The catches 17 that are located fully in the openings 35 are each supported on the one hand by the locking fingers 20 on the locking surface 37 of a detent catch 36 and on the inner wall 38 of an opening 35, and on the other hand by the stiffening ribs 21 on the opposite inner wall 39 of the opening 35. The catches 17 can accommodate high retention forces as a result. Consequently, it is virtually impossible to separate the locked-together fastening parts 10, 30 without destroying the catches 17. In the direction of the plane of the flange 11, the catches 17 and also the catches 18 engaged in the recesses 40 provide for the mutual alignment of the fastening parts 10, 30 with one another and for the transmission of retention forces. In the fully locked position, the expansion pin 28 rests against the floor of the recess 33, and consequently its rear end projects out of the flange 11. In the event of a forceful separation of the fastener by pulling away the trim part 50 and the associated destruction of the catches 17, the expansion pin can be gripped at the now-accessible end, and pulled out of the expansion sleeve 13. In this way, the first fastening part 10 can be released.

## Claims

1. Fastener having a first fastening part (10) that has a flange (11) with a front (12) and a back (16) and an expansion sleeve (13) that projects from the front (12) of the flange (11) and has an opening that is designed to anchor the first fastening part (10) in a fastening opening of a first component, having a second fastening part (30) that has means for fastening to a second component and that can be connected to the flange (11) of the first fastening part (10) in a fully locked position through resilient first catches (17), and having an expansion pin (28) that can be inserted into the expansion sleeve (13) and can be pressed into an expansion position in the expansion sleeve (13) through movement of the second fastening part (30) into the fully locked position, in which position the pin brings about an enlargement of the diameter of the expansion sleeve (13), **characterized in that** the fastening parts (10, 30) have resilient, second catches (18) by means of which the fastening parts (10, 30) can be connected to one another in a pre-locking position in which they are spaced a distance from one another, and **in that** the expansion pin (28) is separated from the second fastening part (30) and, in the pre-locking position, rests with one end against the second fastening part (30) and with the other end engages the expansion sleeve (13) in such a manner that the diameter of the expansion sleeve (13) is not enlarged.

2. Fastener according to claim 1, **characterized in that** the first catches (17) are located on the back (16) of the flange (11) of the first fastening part (10), and **in that** the second fastening part (30) has openings (35) that accommodate the first catches (17) in the fully locked position, wherein a detent catch (36) is located at each opening (35) that projects into the clear area of the opening (35) and cooperates with the first catch (17).

3. Fastener according to one of claims 1 or 2, **characterized in that** the first catches (17) each have an arm (19) projecting from the flange (11), and a flexible locking finger (20) attached to the free end of the arm (19) which locking finger (20) extends towards the plane of the flange at an acute angle to the arm 19).

4. Fastener according to one of claims 2 or 3, **characterized in that** the detent catch (20) has a locking surface (37) that is adjacent to a first inner wall (38) of the opening (35), and **in that** the first catch (17) is supported in the fully locked position on the locking surface (37) and on the first inner wall (38) of the opening (35).

5. Fastener according to one of claims 3 or 4, **characterized in that** the arm (19) of the first catch (17) is supported in the fully locked position on a second inner wall (39) of the opening opposite the first inner wall (38).

6. Fastener according to one of the preceding claims, **characterized in that** the second catches (18) are located on the back (16) of the flange (11) of the first fastening part (10) and each have a flexible finger (23) projecting from the flange (11) with a ratchet (24) having a locking surface (25) facing the flange (11) being formed at the free end of the finger, and **in that** the second fastening part (30) has recesses (40) on opposite sides, delimited by a locking rib (42), into which the ratchets (24) of the second catches (18) snap in the pre-locking position.

7. Fastener according to one of the preceding claims, **characterized in that** the second fastening part (30) has the form of an essentially flat plate with a front (31) designed to contact the flange (11) and a back (32) provided with means for fastening a second component, wherein the thickness of the plate is dimensioned sufficiently large that the first and second catches (17, 18) do not project past the back of the plate in the fully locked position.

8. Fastener according to one of claims 6 or 7, **characterized in that** the locking ribs (42) project from the front (31) of the second fastening part (30) and **in that** the first fastening part (10) has recesses (26) on its back (16) to accommodate the locking ribs (42).

9. Fastener according to one of the preceding claims, **characterized in that** the second fastening part (30) has, on the side facing the first fastening part (10), a recess (33) for accommodating one end of the expansion pin (28).

10. Fastener according to one of the preceding claims, **characterized in that** the second fastening part (30) has sections that project laterally beyond the first fastening part (10) and have open receiving holes (34) on the front (31) of the second fastening part (30) for the engagement of a holding device.

11. Fastener according to one of the preceding claims, **characterized in that** the second fastening part (30) is made of thermoplastic material and has a metal insert (46) on its back (32).

12. Fastener according to one of the preceding claims, **characterized in that** the expansion pin (28) is held in the opening of the expansion sleeve (13) by friction.

13. Fastener according to one of the preceding claims, **characterized in that** the expansion pin (13) is primary molded from thermoplastic material as a single piece with the first fastening part (10) and is held in the opening of the expansion sleeve (13) by a separable film web.

14. Fastener according to one of the preceding claims, **characterized in that** the expansion sleeve (13) has a rectangular cross-section.
